# EUROPÄISCHE PATENTSCHRIFT

(11) **EP 0 708 267 B1**
(45) Veröffentlichungstag und Bekanntmachung des Hinweises auf die Patenterteilung: **08.09.1999**
(21) Anmeldenummer: 95115193.5
(22) Anmeldetag: 27.09.1995
(51) Int. Cl.: F16F 9/02, F16F 9/22

(54) **Gasdruckfeder**
Gas spring
Ressort à gaz

(30) Priorität: 08.10.1994 DE 4436028
(43) Veröffentlichungstag der Anmeldung: 24.04.1996
(73) Patentinhaber: Oest, Burkhard, 59846 Sundern-Wildewiese (DE)
(72) Erfinder: Oest, Burkhard, D-59846 Sundern (DE)
(74) Vertreter: Fritz, Edmund Lothar, Dipl.-Chem.

(56) Entgegenhaltungen:
- EP-A- 0 042 067
- EP-A- 0 227 534
- DE-A- 3 931 475
- DE-U- 7 133 466
- DE-U- 9 400 669
- FR-A- 394 526
- FR-A- 1 449 862
- FR-A- 1 479 884
- GB-A- 2 057 088
- US-A- 3 097 838
- US-A- 4 354 395
- US-A- 4 741 518
- MACHINE MODERNE, Bd. 64, Nr. 734, Mai 1970, PARIS FR, Seite 66 XP002021603 J.A.WALLER: "Amortissement à resoort et pneumatique"

## Beschreibung

Die vorliegende Erfindung betrifft eine Gasdruckfeder mit wenigstens einem entgegen der Federkraft eines in einem Druckraum enthaltenen Druckgases in einem Gehäuse axial beweglichen Kolben, der ringsum in einem Zylinderraum geführt ist und wobei das Gehäuse der Gasdruckfeder einen feststehenden Grundkörper aufweist mit einer Mittelöffnung für den Durchgang einer Führungswelle oder dergleichen und wobei das dem Druckraum abgewandte Ende des Kolbens mit einem einen Hub ausführenden Bauteil verbindbar ist, wobei mehrere Kolben vorgesehen sind, deren Mittelpunkte auf einem Kreisring konzentrisch um die Mittelöffnung des feststehenden Grundkörpers und die Führungswelle herum angeordnet sind, wobei diese Kolben den Hub gemeinsam ausführen und jeweils mit ihrem dem Druckraum abgewandten Ende mit dem Bauteil, das den Hub ausführt, verbindbar sind.

Eine Gasdruckfeder der eingangs genannten Art ist beispielsweise aus der US-A-4,354,395 bekannt. Bei dieser bekannten Gasdruckfeder sind jweils die zylindrischen Druckräume der einzelnen Kolben voneinander getrennt. Dadurch ist es zum Beispiel nicht möglich, einen internen Druckausgleich zwischen den einzelnen Druckräumen innerhalb der Gasdruckfeder zu schaffen. Zwar wäre ein externer Druckausgleich möglich, wozu jedoch jeweils Leitungen zwischen den einzelnen Druckräumen der Kolben und einem externen Druckausgleichsraum notwendig sind. Insbesondere bei einer größeren Anzahl von Kolben sind diese Leitungen störend und sie beschränken auch die Anwendungsmöglichkeiten einer solchen Gasdruckfeder. In vielen Fällen ist diese nicht dazu geeignet, als Ersatz für eine herkömmliche Tellerfeder zu dienen.

Eine weitere Gasdruckfeder ist aus der DE OS 38 14 568 bekannt. Bei dieser bekannten Gasdruckfeder ist der von einem Außenzylinder und einem Innenzylinder begrenzte Ringraum in einen oberen ringförmigen Arbeitsraum und einen unteren ringförmigen Arbeitsraum unterteilt, die über Bohrungen im Ringkolben miteinander in Verbindung stehen. Die beiden Arbeitsräume sind mit einer Dämpfflüssigkeit gefüllt. Zusätzlich ist ein durch einen Trennkolben vom Arbeitsraum abgetrennter Ausgleichsraum vorgesehen, der eine Gasfüllung aufweist. Dadurch, daß man neben diesem Gasdruckraum einen geteilten Arbeitsraum verwendet, der mit Dämpfflüssigkeit gefüllt ist, ergibt sich für die gesamte Gasdruckfeder eine verhältnismäßig große axiale Bauhöhe im Verhältnis zum Durchmesser. Somit ist es nicht möglich, diese Gasdruckfeder zu verwenden, um eine herkömmliche Tellerfeder zu ersetzen, die bislang nach dem Stand der Technik eingesetzt wird, wenn man beispielsweise zwei Platten eines Werkzeugs entgegen einer Federkraft einen Hub gegeneinander ausführen läßt und dabei gleichzeitig einen Freiraum für ein mittiges Führungselement wie eine Führungswelle benötigt, die durch die Feder hindurchgeht.

Die Aufgabe der vorliegenden Erfindung besteht daher darin, eine Gasdruckfeder der eingangs genannten Art zu schaffen, die aufgrund ihrer Bauart, ihrer Abmessungen und ihrer Eigenschaften geeignet ist, anstelle einer sonst für die genannten Einsatzzwecke verwandten Tellerfedersäule oder eines Tellerfederpakets zum Einsatz zu kommen.

Die Lösung dieser Aufgabe liefert eine erfindungsgemäße Gasdruckfeder der eingangs genannten Art mit den kennzeichnenden Merkmalen des Hauptanspruchs.

Bei der erfindungsgemäßen Gasdruckfeder sind mehrere Kolben vorgesehen, deren Mittelpunkte auf einem Kreisring konzentrisch um die feststehende Buchse und die Führungswelle herum angeordnet sind, wobei diese Kolben den Hub gemeinsam ausführen und jeweils mit ihrem dem Druckraum abgewandten Ende mit dem Bauteil, das den Hub ausführt, verbindbar sind. Erfindungsgemäß ist nur ein Arbeitsraum vorhanden für jeden Kolben. Eine Dämpfflüssigkeit ist nicht vorgesehen. Die zylindrischen Druckräume der einzelnen Kolben sind miteinander verbunden. Dies geschieht gemäß der Erfindung über Verbindungskanäle. Diese Verbindungskanäle sind vorzugsweise radial in Bezug auf die Achse der feststehenden Buchse und der Gasdruckfeder angeordnet und können jeweils zwischen zwei benachbarten Kolben verlaufen und zwar so, daß sie an beiden Seiten jeweils tangential die zylindrischen Druckräume dieser benachbarten Kolben anschneiden.

Die erfindungsgemäße Gasdruckfeder hat eine vergleichsweise geringe axiale Bauhöhe im Verhältnis zum Durchmesser. Da gleichzeitig der mittige Freiraum für den Durchgang einer Führungswelle oder dergleichen vorhanden ist, kann man die Gasdruckfeder gemäß der Erfindung dort einsetzen, wo man bislang eine Tellerfedersäule eingesetzt hat, das heißt, man kann unmittelbar eine Tellerfedersäule durch eine solche Gasdruckfeder austauschen ohne sonstige bauliche Veränderungen vorzunehmen. Der Hub der Gasdruckfeder im Vergleich zur axialen Bauhöhe ist ebenfalls relativ groß. Die Federkennlinie der Gasdruckfeder kann man dadurch verändern, daß man den Vordruck in den zylindrischen Druckräumen der einzelnen Kolben durch Gasfüllung variiert. Außerdem kann man gemäß einer bevorzugten Weiterbildung der Erfindung den Druckraum über einen radial abgehenden Anschlußstutzen und eine radiale Bohrung mit einem Druckausgleichsraum verbinden. Da alle zylindrischen Druckräume der einzelnen Kolben vorzugsweise ebenfalls untereinander verbunden sind, sind sie dann auch alle mit dem Druckausgleichsraum verbunden. Beim Hub kann also das Gas aus dem Druckraum teilweise ausströmen und wird somit nicht ausschließlich in dem Druckraum komprimiert. Dadurch kann man die Federkennlinie der Gasdruckfeder variieren. Wählt man einen Vordruck im Druckraum, dann liegt bereits bei Hubbeginn eine Federkraft (Nennkraft) vor. Man kann die Federlinie einer erfindungsgemäßen Gasdruckfeder so wählen, daß sie nahezu linear ist. Im Gegensatz zu einer herkömmlichen Tellerfeder tritt bei der Gasdruckfeder keine Materialermüdung auf. Als Druckgas verwendet man ein inertes Gas, z. B. Stickstoff.

Aufgrund der Bauform ergibt sich bei der erfindungsgemäßen Gasdruckfeder eine aus mehreren kleinen ringförmig angeordneten kreisförmigen Wirkflächen gebildete nahezu ringförmige Wirkfläche in einer Anordnung um das Führungselement herum, wie bei einer herkömmlichen Tellerfeder, während eine herkömmliche Gasdruckfeder mit einem einzigen zylindrischen Druckkolben eine kreisförmige Wirkfläche hat. Gemäß einer alternativen Variante der erfindungsgemäßen Aufgabenlösung kann man auch einen einzelnen Ringkolben verwenden anstelle der mehreren ringförmig angeordneten kleinen Kolben. Bei dieser Variante ist dann der Druckraum, in dem sich der Ringkolben axial bewegt, ebenfalls ringförmig.

Die Verwendung mehrerer kleiner Kolben, deren Mittelpunkt auf einem Kreisring konzentrisch um die feststehende Buchse der Gasdruckfeder angeordnet sind gemäß der ersten Variante der Erfindung hat außerdem den Vorteil, daß ein arbeiten der Gasdruckfeder auch dann noch möglich ist, wenn eine Verkantung der beiden den Hub gegeneinander ausführenden Bauteile erfolgt. Bei der erfindungsgemäßen Gasdruckfeder können hier wesentlich größere Toleranzen ausgeglichen werden als bei einer herkömmlichen Gasdruckfeder aufgrund der Verwendung mehrerer ringförmig angeordneter kleinerer Kolben. Auch bei Ausfall eines Kolbens aufgrund Verkantung können die übrigen Kolben noch arbeiten.

Die in den Unteransprüchen genannten Merkmale betreffen bevorzugte Weiterbildungen der erfindungsgemäßen Aufgabenlösung. Nachfolgend wird die vorliegende Erfindung anhand von Ausführungsbeispielen unter Bezugnahme auf die beiliegenden Zeichnungen näher beschrieben. Dabei zeigen
- Fig. 1: eine Draufsicht auf eine erfindungsgemäße Gasdruckfeder
- Fig. 2: einen Längsschnitt durch die Gasdruckfeder entlang der Linie II - II von Fig. 1
- Fig. 3: einen Längsschnitt durch die Gasdruckfeder entlang der Linie III - III von Fig. 1
- Fig. 4: einen Querschnitt durch die Gasdruckfeder von der Unterseite her gesehen
- Fig. 5: einen Längsschnitt durch eine Gasdruckfeder gemäß einer alternativen Variante der Erfindung

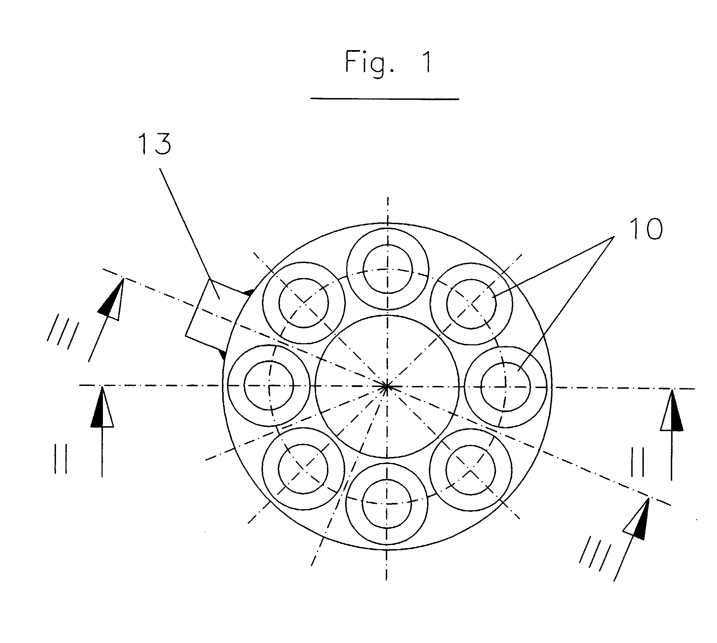

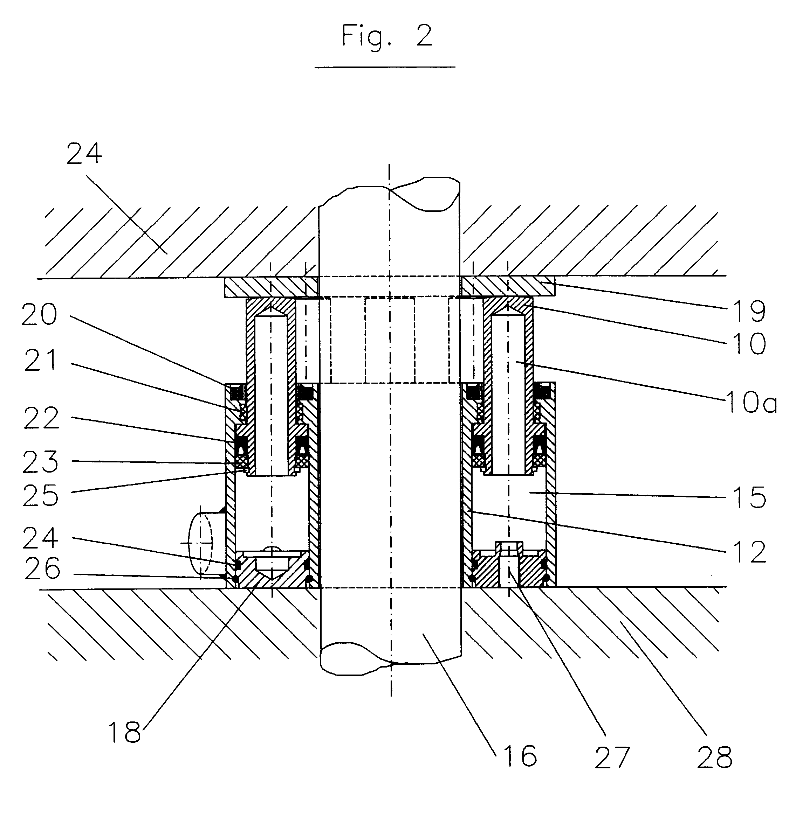

Zunächst wird auf Fig. 2 Bezug genommen. Die erfindungsgemäße Gasdruckfeder wird eingesetzt, um die Bewegung zweier Bauteile, die einen Hub gegeneinander ausführen, abzufedern, dies können z. B. sein eine obere Werkzeugplatte 24 und eine untere Werkzeugplatte 28. Die Gasdruckfeder hat einen feststehenden Grundkörper 12 mit einer Mittelöffnung für den Durchgang einer axial angeordneten Führungswelle 16. Es sind mehrere auf einem Kreisring konzentrisch um die Mittelöffnung des feststehenden Grundkörpers 12 angeordnete Kolben 10 vorgesehen, wobei in diesem Ausführungsbeispiel wie man aus Fig. 1 erkennt acht solche Kolben 10 vorhanden sind, die gemeinsam den Hub ausführen und deren Mittelpunkte auf einem Kreisring angeordnet sind. Wie man aus den Fig. 1 und 2 erkennen kann, ist für jeden Kolben 10 ein zylindrischer Druckraum 15 vorgesehen, der dem Kolben als Arbeitsraum dient, wobei jeder Kolben 10 außerdem jeweils einen mittigen axialen zylindrischen Hohlraum 10a aufweist, der an seinem unteren Ende und somit zum Druckraum 15 hin offen ist. Aus Fig. 2 kann man erkennen, daß die obere Stirnfläche der einzelnen Kolben 10 jeweils etwas ballig ausgeführt ist, was einen Fluchtungsfehlerausgleich zwischen oberer Werkzeugplatte 24 und unterer Werkzeugplatte 28 besser ermöglicht, wobei die einzelnen Kolben 10 unabhängig voneinander federn können.

Aus Fig. 2 ist weiter erkennbar, daß gemäß einer Ausführungsform der Erfindung ein Füllventil 27 vorgesehen ist, über das man die Druckräume 15 mit Gas befüllen kann und somit eine Möglichkeit hat, den Vordruck in den zylindrischen Druckräumen 15 und die Federkennlinie der Gasdruckfeder zu verändern.

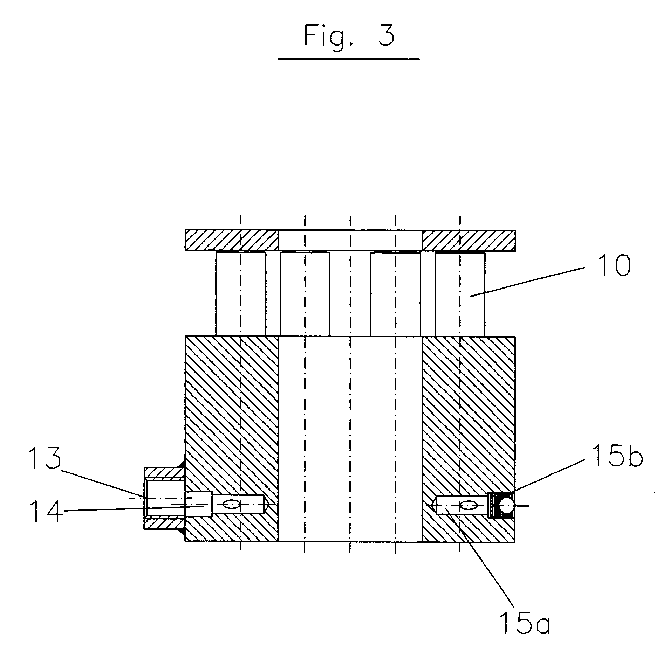

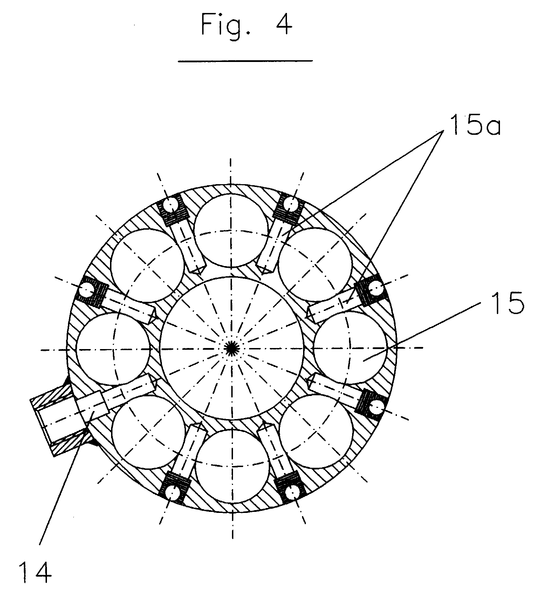

Aus Fig. 1 erkennt man, daß radial von dem Druckraum 15 an einer Stelle ein Anschlußstutzen 13 mit einer radialen Bohrung 14 abgeht (siehe auch Fig. 3), so daß man über diesen Anschlußstutzen 13 den Druckraum 15 der Gasdruckfeder mit einem Druckausgleichsraum (nicht dargestellt) verbinden kann, um so Gas beim Absenken der Kolben 10 ausströmen zu lassen und damit eine weichere Federkennlinie zu erzeugen. Außerdem sind die Druckräume 15 der einzelnen Kolben 10 über in Bezug auf die Achse der feststehenden Buchse 12 und der Gasdruckfeder radiale jeweils zwischen zwei benachbarten zylindrischen Druckräumen 15 liegende und diese jeweils seitlich tangential anschneidende Verbindungskanäle 15a verbunden. Man kann die Anordnung dieser Verbindungskanäle 15a zwischen zwei je benachbarten Druckräumen in Fig. 4 besser erkennen. Wie man sieht, sind bei insgesamt acht Kolben insgesamt acht solcher Verbindungskanäle 15a vorhanden, wobei einer dieser Verbindungskanäle mit der radialen Bohrung 14 zum Druckausgleichsraum verbunden ist. Aus Fig. 3 erkennt man, daß die Verbindungskanäle 15a nach außen hin durch druckfeste Stopfen 15b verschließbar sind.

Es wird nun weiter auf Fig. 2 Bezug genommen. An ihrem oberen Ende sind die Kolben 10 über eine Druckscheibe 19 mit der Werkzeugplatte 24 verbunden, wobei diese Druckscheibe 19 nicht unbedingt vorhanden sein muß. Rings um die Kolben 10 sind außen Abstreifer 20 angeordnet. Unterhalb dieser Abstreifer 20 umgeben die Kolben Führungsringe 21, wobei weiter unterhalb im unteren Bereich der Kolben 10 ebenfalls noch einmal Führungsringe 23 angeordnet sind. Oberhalb dieser Führungsringe 23 befinden sich Dichtungen 22. Somit ist jeder Kolben 10 über die Führungsringe 21, 23 gegenüber seinem Zylinderraum bei der Hubbewegung geführt und der Druckraum 15 ist nach oben hin abgedichtet. Als unteres Widerlager für die Kolben 10 dienen jeweils zylindrische Bauteile 18, die über die Halteringe 26 in der Wandung der feststehenden Buchse 12 bzw. dem Gehäuse befestigt sind. Diese zylindrischen Bauteile 18 sind mittels der Dichtungsringe 24 (O-Ringe) außenseitig abgedichtet. Die zylindrischen Bauteile 18 können entweder Sackbohrungen aufweisen und stirnseitig geschlossen sein oder aber sie sind mit einem Füllventil 27 versehen (siehe rechte Seite der Zeichnung Fig. 2).

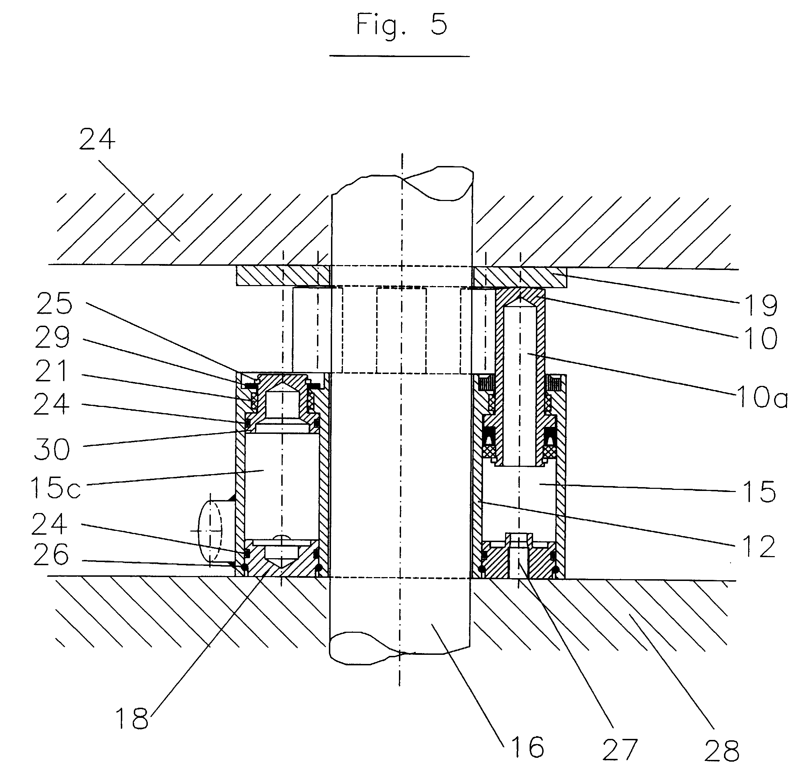

Fig. 5 zeigt eine alternative Variante der Erfindung. Demnach kann man einen oder mehrere der Kolben 10 weglassen und durch jeweils einen Verschlußstopfen 30 ersetzen. Dadurch erhält man unter diesem Verschlußstopfen einen zylindrischen Gasraum 15c, der über Verbindungskanäle 15a mit den Druckräumen 15 der benachbarten Kolben 10 in Verbindung steht. Dadurch hat man die Möglichkeit je nach Anzahl der wegfallenden Kolben die Gesamtkraft der Gasdruckfeder zu reduzieren, wobei jedoch gleichzeitig der gesamte Gasraum vergrößert wird. Somit verringert sich beim Hub der Druckanstieg in dem geschlossenen System. Bei dieser Variante verwendet man keinen externen Durckausgleichsraum, jedoch steht der Gasraum 15c quasi als interner Druckausgleichsraum zur Verfügung. Vorzugsweise werden immer gegenüberliegende Kolben ausgetauscht, damit die Kraftverteilung ausgeglichen bleibt.

## Patentansprüche

1. Gasdruckfeder mit wenigstens zwei entgegen der Federkraft eines in einem Druckraum enthaltenen Druckgases in einem Gehäuse axial beweglichen Kolben, die ringsum in einem Zylinderraum geführt sind und wobei das Gehäuse der Gasdruckfeder einen feststehenden Grundkörper aufweist mit einer Mittelöffnung für den Durchgang einer Führungswelle oder dergleichen und wobei das dem Druckraum abgewandte Ende des jeweiligen Kolbens mit einem einen Hub ausführenden Bauteil verbindbar ist, wobei die Mittelpunkte der Kolben (10) auf einem Kreisring konzentrisch um die Mittelöffnung des feststehenden Grundkörpers (12) vorgesehen sind, und die Führungswelle (16) herum angeordnet sind, wobei diese Kolben (10) den Hub gemeinsam ausführen und jeweils mit ihrem dem Druckraum (15) abgewandten Ende mit dem Bauteil (24), das den Hub ausführt, verbindbar sind,
dadurch gekennzeichnet, daß zur Verbindung der Druckräume (15) der einzelnen Kolben (10) zwischen zwei benachbarten zylindrischen Druckräumen (15) liegende Verbindungskanäle (15a) vorgesehen sind.

2. Gasdruckfeder nach Anspruch 1, dadurch gekennzeichnet, daß die Kolben (10) einen mittigen, axialen zylindrischen Hohlraum (10a) aufweisen, der am einen Ende zum Druckraum (15) hin offen ist.

3. Gasdruckfeder nach Anspruch 1 oder 2, dadurch gekennzeichnet, daß der Druckraum (15) über einen radial abgehenden Anschlußstutzen (13) und eine radiale Bohrung (14) mit einem Druckausgleichsraum verbunden ist.

4. Gasdruckfeder nach einem der Ansprüche 1 bis 3, dadurch gekennzeichnet, daß für jeden einzelnen Kolben (10) ein zylindrischer Druckraum (15) vorgesehen ist, wobei die Druckräume der einzelnen Kolben miteinander verbunden sind.

5. Gasdruckfeder nach einem der Ansprüche 1 bis 4, dadurch gekennzeichnet, daß als unteres Widerlager für den Kolben (10) ein zylindrisches Bauteil (18) dient, das den Druckraum stirnseitig verschließt und wahlweise ein Füllventil 27 für die Befüllung des Druckraums aufweist.

6. Gasdruckfeder nach einem der Ansprüche 1 bis 5, dadurch gekennzeichnet, daß die Verbindungskanäle (15a) in Bezug auf die Achse der feststehenden Buchse (12) radial angeordnet sind.

7. Gasdruckfeder nach einem der Ansprüche 1 bis 6, dadurch gekennzeichnet, daß die Verbindungskanäle (15a) jeweils zwei benachbarte zylindrische Druckräume (15) seitlich tangential anschneiden.

8. Gasdruckfeder nach einem der Ansprüche 1 bis 7, dadurch gekennzeichnet, daß die Verbindungskanäle (15a) nach außen hin durch druckfeste Stopfen (15b) verschließbar sind.

9. Gasdruckfeder nach einem der Ansprüche 1 bis 8, dadurch gekennzeichnet, daß das Verhältnis der axialen Bauhöhe der Gasdruckfeder zu deren Durchmesser sowie deren Hub so gewählt ist, so daß diese in ihren Abmessungen und Eigenschaften einer herkömmlichen Tellerfedersäule entspricht.

10. Gasdruckfeder nach einem der Ansprüche 1 bis 9, dadurch gekennzeichnet, daß einer oder mehrere der Kolben (10) durch einen Verschlußstopfen (30) ersetzt sind, so daß unterhalb des Verschlußstopfens (30) ein zusätzlicher Gasraum (15c) vorhanden ist, der mit den Druckräumen (15) der benachbarten Kolben (10) in Verbindung steht.

## Claims

1. Gas spring with at least two pistons which are axially movable in a housing against the spring force of a pressure gas contained in a pressure room and which are guided all around in a cylinder space, the housing of the gas spring comprising a stationary base body with a central opening for the passage of a guide shaft or the like, the end of the respective piston turned away from the pressure space being able to be connected to a constnictional part making a movement of stroke, the central points of the pistons (10) being provided concentrically on a circular ring around the central opening of the stationary base body (12) and arranged around the guide shaft (16), said pistons (10) making the movement of stroke in common and each being able to be connected with their ends turned away from the pressure space (15) to the constructional part (24) making the movement of stroke,
characterised in that for the connection of the pressure spaces (15) of the individual pistons (10) connecting channels (15a) are provided lying between two adjacent cylindrical pressure spaces (15).

2. Gas spring as claimed in claim 1, characterised in that the pistons (10) comprise a central axially extending cylindrical hollow space (10a) which is open at one end towards the pressure space (15).

3. Gas spring as claimed in claim 1 or 2, characterised in that the pressure space (15) is connected to a pressure-equalisation space via a connecting socket (13) branching off radially and a radial bore (14).

4. Gas spring as claimed in any one of claims 1 to 3, characterised in that for each individual piston (10) a cylindrical pressure space (15) is provided, the pressure spaces of the individual pistons being connected to each other.

5. Gas spring as claimed in any one of claims 1 to 4, characterised in that a cylindrical constructional part (18) serves as a lower abutment for the piston (10), said counter bearing closing the pressure space at the front side and comprising optionally a filling valve (27) for filling the pressure space.

6. Gas spring as claimed in any one of claims 1 to 5, characterised in that the connecting channels (15a) are arranged radially relative to the axis of the stationary socket.

7. Gas spring as claimed in any one of claims 1 to 6, characterised in that the connecting channels (15a) each intersect two adjacent cylindrical pressure spaces (15) tangentially at the side.

8. Gas spring as claimed in any one of claims 1 to 7, characterised in that the connecting channels (15a) can be closed towards the outside by means of pressure resistant stoppers (15b).

9. Gas spring as claimed in any one of claims 1 to 8, characterised in that the ratio of the axial overall height of the gas spring relative to its diameter as well as to its stroke is chosen in such a manner that it corresponds to a conventional cup spring guide as regards its dimensions and its properties.

10. Gas spring as claimed in any one of claims 1 to 9, characterised in that one or several of the pistons (10) are substituted by a stopper (30) so that below the stopper (30) an additional gas space (15c) will be provided which is in communication with the pressure spaces (15) of the adjacent pistons (10).

## Revendications

1. Ressort à gaz avec aux moins deux pistons pouvant être déplacé axialement dans un boîtier à l'encontre de la force de pression d'un gaz de pression contenu dans une chambre de pression, cylindre qui sont guidés dans une chambre de cylindre périphérique et où le boîtier du ressort gaz présente un corps de base fixe avec une ouverture centrale pour le passage d'un arbre menant ou similaire et où l'extrémité éloignée de la chambre de pression de chaque piston peut être reliée à un élément de construction exécutant une course, où les points centraux des pistons (10) sont disposé sur un cercle concentrique autour de l'ouverture du corps de base fixe (12) et autour de l'arbre menant (16), où ces pistons (10) exécutent la course tous ensemble et peuvent chacun, par leur extrémité éloignée de la chambre de pression (15) être reliés à l'élément de construction (24) qui exécute la course,
caractérisé en ce que pour la communication entre les chambres de pression (15) des différents pistons (10) sont prévus des conduits de communication (15a) situés entre deux chambres de pression cylindriques (15) voisines.

2. Ressort de pression suivant la revendication 1, caractérisé en ce que les pistons (10) présentent une cavité cylindrique centrale axiale (10a) qui est ouverte à une extrémité vers la chambre de pression (15).

3. Ressort de pression suivant la revendication 1 ou la revendication 2, caractérisé en ce que la chambre de pression est par l'intermédiaire d'une tubulure de raccord issue radialement (13) et par l'intermédiaire d'une forure radiale (14) en communication avec une chambre de compensation de pression.

4. Ressort à gaz suivant l'une quelconque des revendications de 1 à 3, caractérisé en ce que pour chaque piston individuel (10) il est prévu une chambre de pression cylindrique (15), où les chambres de pression des différents pistons sont en communication les unes avec les autres.

5. Ressort à gaz suivant l'une quelconque des revendications de 1 à 4, caractérisé en ce que la butée inférieure pour le piston (10) est constituée par un élément de construction cylindrique (18), qui ferme la chambre de pression du côté frontal et présente à volonté une soupape de remplissage (27) pour le remplissage de la chambre de pression.

6. Ressort à gaz suivant l'une quelconque des revendications de 1 à 5, caractérisé en ce que les conduits de communication (15a) sont disposés radialement par rapport à l'axe de la douille fixe (12).

7. Ressort à gaz suivant l'une quelconque des revendications de 1 à 6, caractérisé en ce que les conduits de communication (15a) contactent chacun latéralement et tangentiellement deux chambres de pression cylindriques (15) voisines.

8. Ressort à gaz suivant l'une quelconque des revendications de 1 à 7, caractérisé en ce que vers l'extérieur, les conduits de communication (15a) peuvent être obturés par des bouchons (15b) résistant à la pression.

9. Ressort à gaz suivant l'une quelconque des revendications de 1 à 8, caractérisé en ce que le rapport de la hauteur de construction axiale du ressort à gaz à son diamètre d'une part et sa course d'autre part est choisi de manière telle que ce ressort correspond, quant à ses dimensions et des propriétés, à une colonne à ressort à disques traditionnelle.

10. Ressort à gaz suivant l'une quelconque des revendications de 1 à 9, caractérisé en ce que un ou plusieurs pistons (10) est remplacé par un bouchon d'obturation (30), de telle sorte qu'au-dessous du bouchon d'obturation est créée une chambre de pression (15a) additionnelle, qui est en communication avec les chambres de pression (15) des pistons (10) voisins.
